# FASCICULE DE BREVET EUROPEEN

(11) **EP 4 346 693 B1**
(45) Date de publication et mention de la délivrance du brevet: **20.08.2025**
(21) Numéro de dépôt: 21736626.9
(22) Date de dépôt: 27.05.2021
(51) Int. Cl.: A61C 13/00, A61C 13/20, A61C 13/087, A61C 13/09

(54) **BLOC USINABLE PAR CFAO POUR LA FABRICATION D'ÉLÉMENT PROTHÉTIQUE DENTAIRE NOTAMMENT D'INLAY-CORE FIBRÉ**
CAD/CAM-BEARBEITBARER BLOCK ZUR HERSTELLUNG EINES ZAHNPROTHESENELEMENTS, INSBESONDERE EINES FASEREINLAGEKERNS
BLOCK MACHINABLE BY CAD/CAM FOR THE MANUFACTURE OF A DENTAL PROSTHETIC ELEMENT, IN PARTICULAR A FIBRE INLAY CORE

(43) Date de publication de la demande: 10.04.2024
(73) Titulaire: Societe de Recherches Techniques Dentaires, 38120 Saint-Egreve (FR)
(72) Inventeur: CHU, Manh-Quynh, 38120 FONTANIL CORNILLON (FR)
(74) Mandataire: Allen, Caroline Margaret
(86) Numéro de dépôt international: PCT/FR2021/050966
(87) Numéro de publication internationale: WO 2022/248775

(56) Documents cités:
- WO-A1-2009/070470
- WO-A1-2009/154301
- US-A1- 2015 024 345

## Description

L'invention a pour objet un bloc destiné aux machines d'usinage CFAO ou plus généralement un bloc support usinable par CFAO pour la fabrication d'éléments prothétiques dentaires tel que les couronnes, les bridges, les inlay-cores (tenon + faux moignon), les tenons, les piliers d'implant (abutment). Elle concerne également un procédé de fabrication dudit bloc.

L'usinage d'éléments prothétiques dentaires, spécifiquement des couronnes, des bridges par CFAO (Conception Fabrication Assistée par Ordinateur) à partir de préforme est parfaitement connu. Cette technologie, également désignée CAD/CAM (anglais) a par exemple été décrite dans le document EP 040165 B1. La technologie a depuis évolué, tant sur le plan du matériel de CFAO, que sur le plan de la composition des préformes.

Il existe essentiellement 2 types de préformes.

Le premier type se présente sous la forme de « blocs » de forme générale parallélépipédique. Dans ce cas, les blocs sont fixés au bras articulé exposant la préforme à l'outil d'usinage, par le biais d'un mandrin solidaire du bloc. C'est ce type de préforme qui est concerné par l'invention.

Le second type de préforme se présente sous la forme d'un « disque » au sein duquel sont usinés les éléments prothétiques. Dans ce cas, le disque ne présente pas d'agencement spécifique permettant de le fixer sur le bras articulé. Il est simplement positionné dans une empreinte à sa forme que présente le bras articulé.

L'invention sera par la suite plus particulièrement décrite en relation avec un bloc CFAO utilisé pour la fabrication d'inlay-cores fibrés.

L'inlay-core est une pièce monobloc constituée d'un tenon surmonté d'un faux moignon. Il est réalisé en métal, plus rarement en céramique. Il est formé d'une seule pièce, raison pour laquelle il est désigné « inlay-core ou post & core ». Il est donc constitué d'un même matériau. L'inlay-core sert de support à une reconstitution de dent dépulpée.

Sur le plan de la fabrication, les inlay-cores métalliques peuvent être obtenus par la technique dite coulée à cire perdue au laboratoire de prothèse ou plus rarement par usinage en CFAO à partir de disque en acier ou en titane.

Il existe également des inlay-cores fibrés, qui peuvent être usinés à partir de disque du type de celui mentionné précédemment et tel que décrit dans le document EP 16 798 238, dans lequel sont formées des alvéoles. Chaque alvéole est remplie d'un matériau composite dans lequel sont noyées des fibres verticales. La machine CFAO usine directement les inlay core dans le matériau composite.

Il est également possible de réaliser des tenons ou des inlay-cores en matériau composite à partir de bloc CFAO. Dans ce cas, l'insert dans lequel est usiné l'inlay core, désigné par la suite « insert » doit être attaché à un mandrin métallique. Pour ce faire, on colle le mandrin métallique sur une des faces de l'insert.

La fabrication industrielle de ces blocs rend la solution d'usinage onéreuse. En effet, les inserts doivent être préalablement recouverts de résine, puis assemblés par collage aux mandrins métalliques préalablement usinés. Le coût du mandrin métallique typiquement en laiton, en aluminium, ou en acier inoxydable associé aux nombreuses étapes de fabrication conduisent à un coût de production élevé. Par ailleurs, les blocs disponibles sur le marché ont des tailles standards, par exemple 14mm x18mm x 14mm (largeur x longueur x hauteur). Ces blocs servent aussi bien à la fabrication de couronnes que de tenons. Or, dans la mesure où une couronne occupe un volume bien plus important que celui d'un tenon, il y a une surconsommation excessive de matière dans le cas de la fabrication d'un tenon et donc un surcoût inutile.

Le document WO 2009/070470 A1 décrit une préforme réticulable destinée à être usinée par CFAO. La préforme comprend un insert constitué de deux matériaux SMC (self-supporting malléable curable) correspondant à la composition de la dentine et de l'émail. Le bloc est fourni avec une tige qui peut prendre la forme d'un mandrin, lequel peut ensuite être réticulé en cas d'usinage après fixation du bloc sur une machine. La tige est à priori fournie séparément et probablement solidarisée par tout moyen connu, au bloc, ce qui rend le produit compliqué à manipuler. Rien n'est indiqué concernant le matériau constitutif de la tige.

Par conséquent, le problème que se propose de résoudre l'invention est celui de mettre au point un bloc CFAO susceptible d'être fixé à la machine d'usinage CFAO par le biais d'un mandrin, qui ne présente pas les inconvénients ci-dessus, en particulier qui soit facile à fabriquer et donc peu coûteux.

Le second problème que se propose de résoudre l'invention est celui de mettre au point un bloc CFAO de taille standard mais dont la teneur en matériau constituant l'insert soit fonction de l'élément prothétique à fabriquer.

Le Demandeur a mis au point un bloc d'usinage en CFAO dentaire pour élément prothétique dont le mandrin et le matériau d'enrobage d'insert est constitué d'un seul et même matériau réticulé.

Plus précisément, l'invention concerne un bloc pour usinage en CFAO d'élément prothétique dentaire comportant :
- un insert dans lequel est usiné ledit élément prothétique,
- une couche polymérique recouvrant au moins une partie de la surface dudit insert,
- un mandrin solidaire de la couche polymérique.

Le bloc se caractérise en ce que le mandrin est réalisé dans un matériau identique à celui de la couche polymérique et en ce que le mandrin et la couche polymérique sont réticulés.

Par l'expression «matériau identique », on désigne un matériau qui a la même composition que celle de la couche polymérique.

En pratique, ledit matériau est un polymère thermodurcissable, avantageusement choisi dans le groupe comprenant polyuréthanne (PU), les résines méthacrylique ou un polymère thermoplastique choisi dans le groupe comprenant polycarbonate (PC), polyoxyméthylène ou polyacétal, (POM) polyméthylmethacrylate (PMMA), polyuréthanne (PU), polyamide (PA). Cette liste est non exhaustive dans la mesure où d'autres polymères à la fois résistants mécaniquement pour que le mandrin ne casse pas et compatibles avec des applications dentaires peuvent être employés. Avantageusement, les polymères ci-dessus et notamment PC, PMMA, PU ou PA sont renforcés par des fibres aléatoires, par exemple des fibres de verre. De préférence, les fibres aléatoires représentent de 10 à 50% en poids, avantageusement 30% en poids du matériau.

Ces inserts peuvent être de forme cylindrique, cubique ou parallélépipède rectangle selon les applications souhaitées.

Selon une caractéristique essentielle, le bloc CFAO de l'invention comprend un insert dont au moins une partie de la surface est recouverte d'une couche polymérique réticulée.

Dans un mode de réalisation préféré, en particulier lorsque l'insert est de forme cubique ou parallélépipède rectangle, au moins la face de l'insert, dite « face débouchante » n'est pas recouverte de la couche polymérique. La face débouchante est en pratique la face opposée à la face de l'insert sur laquelle est fixée le mandrin, cette dernière étant recouverte selon l'invention d'une couche polymérique réticulée.

Dans un mode de réalisation avantageux, l'insert est de forme cubique ou parallélépipède rectangle et présente 1 seule face recouverte de la couche polymérique, à savoir la face d'où émerge le mandrin. Ce mode de réalisation est particulièrement approprié pour la fabrication de couronnes ou de bridges qui nécessitent un volume de matière constituant l'insert, important.

Dans un autre mode de réalisation, l'insert est de forme cubique ou parallélépipède rectangle et présente 2 faces recouvertes de la couche polymérique, respectivement la face d'où émerge le mandrin, et 1 face prolongeant un côté de la face d'où émerge le mandrin. Ce mode de réalisation est particulièrement approprié pour la fabrication de tenons, d'inlay cores ou de piliers d'implant qui nécessitent un volume de matière constituant l'insert, moins important que pour la fabrication de couronnes ou de bridges. L'insert est donc recouvert d'une teneur en couche polymérique supérieure à celle du mode de réalisation précédent et contient une teneur en matière constitutive de l'insert, inférieure, ce qui réduit ainsi le coût par rapport aux blocs de l'état de la technique.

Dans un autre mode de réalisation, la totalité de la surface de l'insert est recouverte par la couche polymérique. Ce peut être notamment le cas lorsque l'insert est de forme cylindrique. De préférence, le mandrin est dans ce cas positionné dans une direction orthogonale à celle de l'axe du cylindre. Eu égard au volume moindre de l'insert, ce mode de réalisation sera également plus approprié pour la fabrication de tenons, d'inlay cores et de piliers d'implant.

Dans tous les cas, la couche polymérique est avantageusement surmoulée sur l'insert.

En pratique, hors mandrin, la couche polymérique représente entre 10 et 50% en poids du poids total du bloc.

L'insert peut être en métal ou de préférence en un matériau composite.

L'invention concerne également l'utilisation du bloc précédemment décrit pour l'usinage d'éléments prothétiques dentaires tels que couronnes, bridges, inlay-cores (tenon + faux moignon), tenons, piliers d'implant (abutment).

Dans un premier mode de réalisation, le bloc de l'invention est utilisé pour l'usinage de couronne, bridge. Dans ce cas, l'insert en matériau composite est typiquement composé de polymères notamment résines méthacryliques, avantageusement réticulé, renforcées par des charges telles que de la silice, du verre céramique, des particules radio-opaques pris seuls ou en combinaison, bien connus dans le domaine dentaire. Ces charges renforçantes peuvent représenter jusqu'à 85% en poids de l'insert. En pratique, ces inserts sont fabriqués par moulage.

Dans le cas d'inlay-core fibré, de tenon fibré, de pilier d'implant, le matériau composite est composé de polymères notamment du type époxy, polyester, vinylester, résine méthacrylique renforcée par des fibres longues unidirectionnelles notamment des fibres de verre, quartz, silice, XRO ou généralement de toutes fibres présentant des performances mécaniques élevées. Ces fibres peuvent représenter jusqu'à 85% en poids du matériau de l'insert. Dans ce cas, l'insert est obtenu à partir de profilés obtenus par exemple par la technique de pultrusion conduisant à des produits réticulés. Les profilés de section cylindrique, carrée ou rectangulaire sont ensuite découpés en plusieurs tronçons selon la hauteur désirée pour le bloc.

Quel que soit le type d'insert, ces derniers subissent ensuite avantageusement un traitement mécanique du type sablage, usinage afin d'obtenir une surface rugueuse favorisant l'adhésion avec la couche polymérique. Si nécessaire, un traitement physico-chimique du type plasma-silanisation peut être appliqué sur les inserts.

L'invention a également pour objet un procédé de fabrication du bloc CFAO tel que précédemment décrit.

Ce procédé comprend les étapes suivantes :
- préparer un moule présentant 2 parties creuses respectivement une première partie avantageusement de forme cubique ou parallélépipédique se prolongeant sur un de ses côtés par une seconde partie à la forme du mandrin,
- positionner l'insert préalablement fabriqué dans la première partie,
- injecter un matériau polymérique dans le moule,
- réticuler le matériau polymérique,
- démouler le bloc.

Dans un premier mode de réalisation, on positionne l'insert au centre de la première partie et on injecte le matériau dans la totalité du volume restant de la première partie et dans la totalité du volume de la seconde partie. Dans ces conditions, toute la surface de l'insert est recouverte de matériau polymérique. L'insert peut être de forme parallélépipédique ou cylindrique.

Dans un second mode de réalisation, l'insert est de forme générale parallélépipédique et on injecte le matériau dans partie seulement du volume de la première partie et dans la totalité du volume de la seconde partie. Dans ces conditions, on positionne l'insert dans la première partie du moule de sorte à ce que le matériau polymérique vienne recouvrir au moins la face de l'insert d'où émerge le mandrin.

Les inserts sont avantageusement des inserts en matériaux composites tels que décrits précédemment.

L'invention et les avantages qui en découle ressortiront bien des exemples suivants à l'appui des figures annexées.
[Fig.1] La figure 1 est une représentation du bloc de l'invention selon un premier mode de réalisation.
[Fig.2] La figure 2 est une représentation du bloc de l'invention selon un second mode de réalisation.
[Fig.3] La figure 3 est une représentation du bloc de l'invention selon un troisième mode de réalisation.

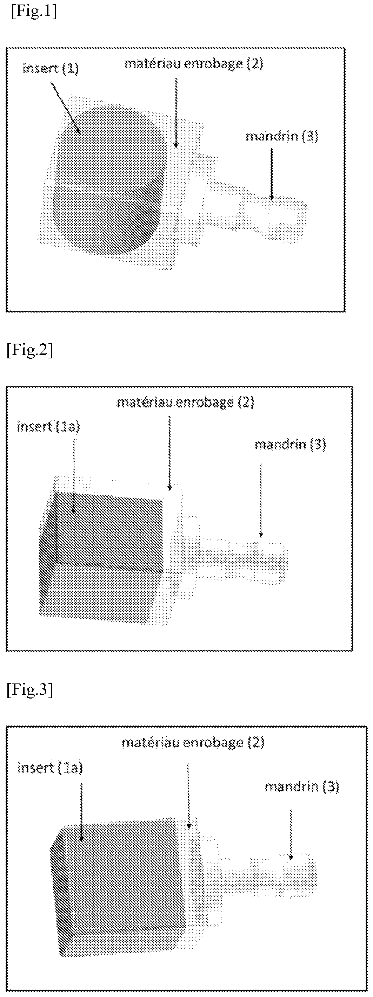

Sur la figure 1, on a représenté un bloc pour usinage en CFAO d'élément prothétique dentaire selon l'invention. Il est constitué d'un insert (1) qui se présente sous la forme d'un cylindre, d'une couche polymérique réticulée (2), par exemple faite de PMMA et d'un mandrin (3). La couche polymérique recouvre la totalité de la surface de l'insert et forme un cube. Le mandrin (3) est fabriqué en un matériau identique à celle de la couche polymérique.

L'insert est composé de polymères notamment du type époxy, polyester, vinylester, résine méthacrylique renforcés par des fibres longues unidirectionnelles notamment des fibres de verre, quartz, silice, XRO. L'insert est obtenu à partir de profilés obtenus par la technique de pultrusion. Les profilés de section cylindrique sont ensuite découpés en plusieurs tronçons selon la hauteur désirée pour le bloc.

Le procédé de fabrication est le suivant :
- on prépare un moule présentant 2 parties creuses respectivement, une première partie de forme cubique se prolongeant sur un de ses côtés par une seconde partie à la forme du mandrin,
- on positionne l'insert cylindrique préalablement fabriqué au centre de la première partie,
- on injecte un matériau polymérique dans le moule de manière à remplir la totalité du volume restant de la première partie et la totalité du volume de la seconde partie,
- on réticule le matériau polymérique,
- on démoule le bloc.

Dans ces conditions, le surmoulage formé de la couche polymérique est de forme cubique. Le bloc ainsi obtenu est particulièrement adapté pour la fabrication de tenon, inlay cores et piliers d'implant pour lesquels la quantité de matériau constitutif de l'insert est moindre.

Sur la figure 2, on a représenté un bloc selon un second mode de réalisation. Il est constitué d'un insert (1a) qui se présente sous la forme d'un cube, d'une couche polymérique réticulée (2), par exemple en PC et d'un mandrin (3). La couche polymérique recouvre la face (première face) du cube en contact avec le mandrin et une face du cube prolongeant la première face.

L'insert est composé de polymères notamment du type époxy, polyester, vinylester, résine méthacrylique renforcés par des fibres longues unidirectionnelles notamment des fibres de verre, quartz, silice, XRO. L'insert est obtenu à partir de profilés obtenus par la technique de pultrusion. Les profilés de section carrée sont ensuite découpés en plusieurs tronçons selon la hauteur désirée pour le bloc.

Le procédé de fabrication est le suivant :
- on prépare un moule présentant 2 parties creuses respectivement, une première partie de forme cubique se prolongeant sur un de ses côtés par une seconde partie à la forme du mandrin,
- on positionne l'insert cubique préalablement fabriqué dans la première partie du moule de sorte à ce que le matériau polymérique vienne recouvrir les 2 faces de l'insert susmentionnées,
- on injecte un matériau polymérique dans le moule de manière à remplir la totalité du volume restant de la première partie et la totalité du volume de la seconde partie,
- _ on réticule le matériau polymérique,
- on démoule le bloc.

Le bloc ainsi obtenu est particulièrement adapté pour la fabrication de tenon, inlay cores et piliers d'implant pour lesquels la quantité de matériau constitutif de l'insert est moindre.

Sur la figure 3, on a représenté un bloc selon un troisième mode de réalisation. Il est constitué d'un insert (1a) qui se présente sous la forme d'un cube, d'une couche polymérique réticulée (2), par exemple en PU, et d'un mandrin (3). A la différence du mode de réalisation précédent, la couche polymérique ne recouvre que la face du cube d'où émerge le mandrin.

Dans ce cas, l'insert en matériau composite est typiquement composé de polymères notamment résines méthacryliques renforcées par des charges telles que de la silice, du verre céramique, des particules radio-opaques

Le procédé de fabrication est le suivant :
- on prépare un moule présentant 2 parties creuses respectivement, une première partie de forme cubique se prolongeant sur un de ses côtés par une seconde partie à la forme du mandrin,
- on injecte un matériau polymérique dans le moule de manière à remplir la totalité du volume restant de la première partie et la totalité du volume de la seconde partie,
- on réticule le matériau polymérique,
- on démoule le bloc.

Le bloc ainsi obtenu est particulièrement adapté pour la fabrication de couronnes et bridges pour lesquels la quantité de matériau constitutif de l'insert est importante.

L'invention et les avantages qui en découlent ressortent bien de la description qui précède. On note en particulier l'avantage lié la fabrication du mandrin dans un matériau identique à celui de la couche polymérique recouvrant l'insert qui permet de réduire drastiquement les coûts sans altérer la manipulabilité du bloc

## Revendications

1. Bloc pour usinage en CFAO d'élément prothétique dentaire comportant :
- un insert (1) dans lequel est usiné ledit élément prothétique,
- une couche polymérique (2) recouvrant au moins une surface dudit insert (1),
- un mandrin (3) solidaire de la couche polymérique (2),
**caractérisé en ce que** le mandrin (3) est réalisé dans un matériau identique à celui de la couche polymérique (2) et **en ce que** le mandrin (3) et la couche polymérique (2) sont réticulés.

2. Bloc selon la revendication 1, **caractérisé en ce que** ledit matériau est un polymère thermodurcissable avantageusement choisi dans le groupe comprenant polyuréthanne (PU), résine méthacrylique ou un polymère thermoplastique avantageusement choisi dans le groupe comprenant polycarbonate (PC), polyoxyméthylène ou polyacétal, (POM) polyméthylmethacrylate (PMMA), polyuréthanne (PU), polyamide (PA).

3. Bloc selon l'une des revendications précédentes, **caractérisé en ce que** le matériau est renforcé par des fibres aléatoires, de préférence des fibres de verre.

4. Bloc selon la revendication 3, **caractérisé en ce que** les fibres aléatoires représentent de 10 à 50% en poids, avantageusement 30% en poids du matériau.

5. Bloc selon l'une des revendications précédentes, **caractérisé en ce que** l'insert est de forme cubique ou parallélépipède rectangle et présente 2 faces recouvertes de la couche polymérique, respectivement la face d'où émerge le mandrin, et 1 face prolongeant un côté de la face d'où émerge le mandrin.

6. Bloc selon l'une des revendications 1 à 4, **caractérisé en ce que** l'insert est de forme cubique ou parallélépipède rectangle et présente 1 seule face recouverte de la couche polymérique, à savoir la face d'où émerge le mandrin.

7. Bloc selon l'une des revendications 1 à 4, **caractérisé en ce que** l'insert est de forme cylindrique et la totalité de sa surface est recouverte d'une couche polymérique.

8. Bloc selon la revendication 7, **caractérisé en ce que** le mandrin est positionné dans une direction orthogonale à celle de l'axe du cylindre.

9. Utilisation du bloc selon l'un des revendications 1 à 8 pour l'usinage d'éléments prothétiques dentaires tels que couronnes, bridges, inlay-cores (tenon + faux moignon), tenons, piliers d'implant (abutment).

10. Procédé de fabrication du bloc objet de l'une des revendications précédentes **caractérisé en ce qu'**il comprend les étapes suivantes :
- préparer un moule présentant 2 parties creuses respectivement, une première partie de forme cubique ou parallélépipédique se prolongeant sur un de ses côtés par une seconde partie à la forme du mandrin,
- positionner l'insert préalablement fabriqué dans la première partie,
- injecter un matériau polymérique dans le moule de manière à remplir les 2 parties,
- réticuler le matériau polymérique,
- démouler le bloc.

## Patentansprüche

1. Block zur CAD/CAM-Bearbeitung eines Zahnprothesenelements, umfassend:
- einen Einsatz (1), in den das Prothesenelement eingearbeitet wird,
- eine Polymerschicht (2), die mindestens eine Oberfläche des Einsatzes (1) bedeckt,
- einen Dorn (3), der fest mit der Polymerschicht (2) verbunden ist,
**dadurch gekennzeichnet, dass** der Dorn (3) aus einem Material hergestellt ist, das mit dem der Polymerschicht (2) identisch ist, und dass der Dorn (3) und die Polymerschicht (2) vernetzt sind.

2. Block nach Anspruch 1, **dadurch gekennzeichnet, dass** das Material ein wärmehärtendes Polymer ist, das vorteilhafterweise ausgewählt ist aus der Gruppe umfassend Polyurethan (PU), Methacrylharz oder einem thermoplastischen Polymer, das vorteilhafterweise ausgewählt ist aus der Gruppe umfassend Polycarbonat (PC), Polyoxymethylen oder Polyacetal (POM), Polymethylmethacrylat (PMMA), Polyurethan (PU), Polyamid (PA).

3. Block nach einem der vorhergehenden Ansprüche, **dadurch gekennzeichnet, dass** das Material durch zufällige Fasern, vorzugsweise Glasfasern, verstärkt ist.

4. Block nach Anspruch 3, **dadurch gekennzeichnet, dass** die zufälligen Fasern von 10 bis 50 Gewichts-%, vorteilhafterweise 30 Gewichts-%, des Materials darstellen.

5. Block nach einem der vorhergehenden Ansprüche, **dadurch gekennzeichnet, dass** der Einsatz kubisch oder rechteckig-parallelepipedisch geformt ist und 2 mit der Polymerschicht bedeckte Seiten aufweist, jeweils die Seite, aus der der Dorn hervorsteht, und 1 Seite, die eine Seite der Seite verlängert, aus der der Dorn hervorsteht.

6. Block nach einem der Ansprüche 1 bis 4, **dadurch gekennzeichnet, dass** der Einsatz kubisch oder rechteckig-parallelepipedisch geformt ist und 1 einzige Seite aufweist, die mit der Polymerschicht bedeckt ist, nämlich die Seite, aus der der Dorn hervorsteht.

7. Block nach einem der Ansprüche 1 bis 4, **dadurch gekennzeichnet, dass** der Einsatz zylindrisch geformt ist und seine gesamte Oberfläche mit einer Polymerschicht bedeckt ist.

8. Block nach Anspruch 7, **dadurch gekennzeichnet, dass** der Dorn in einer Richtung orthogonal zu jener der Achse des Zylinders positioniert ist.

9. Verwendung des Blocks nach einem der Ansprüche 1 bis 8 zum Bearbeiten von Zahnprothesenelementen, wie Kronen, Brücken, Einlagekernen (Stift + falscher Stumpf), Zapfen, Implantatpfeilern (Abutment).

10. Verfahren zur Herstellung des Blocks, der Gegenstand eines der vorhergehenden Ansprüche ist, **dadurch gekennzeichnet, dass** es die folgenden Schritte umfasst:
- Vorbereiten einer Form, die jeweils 2 hohle Teile aufweist, wobei ein erster Teil in kubischer oder parallelepipedischer Form auf einer seiner Seiten durch einen zweiten Teil in der Form des Dorns verlängert wird,
- Positionieren des Einsatzes, der zuvor in dem ersten Teil hergestellt wurde,
- Einspritzen eines Polymermaterials in die Form, um beide Teile zu füllen,
- Vernetzen des Polymermaterials,
- Entformen des Blocks.

## Claims

1. Block for CAD/CAM machining of a dental prosthetic component comprising:
- an insert (1) in which said prosthetic component is machined,
- a polymer layer (2) covering at least one surface of said insert (1),
- a mandrel (3) integral with the polymer layer (2),
**characterized in that** the mandrel (3) is made of an identical material to that of the polymer layer (2) and that the mandrel (3) and the polymer layer (2) are crosslinked.

2. Block according to Claim 1, **characterized in that** said material is a thermosetting polymer advantageously selected from the group comprising polyurethane (PU), methacrylic resin or a thermoplastic polymer advantageously selected from the group comprising polycarbonate (PC), polyoxymethylene or polyacetal (POM), polymethylmethacrylate (PMMA), polyurethane (PU), polyamide (PA).

3. Block according to any one of the preceding claims, **characterized in that** the material is reinforced by random fibres, preferably glass fibres.

4. Block according to Claim 3, **characterized in that** the random fibres represent from 10 to 50% by weight, advantageously 30% by weight, of the material.

5. Block according to any one of the preceding claims, **characterized in that** the insert is in the shape of a cube or rectangular parallelepiped and has 2 faces covered by the polymer layer, namely the face from which the mandrel emerges and 1 face extending one side of the face from which the mandrel emerges, respectively.

6. Block according to any one of Claims 1 to 4, **characterized in that** the insert is in the shape of a cube or a rectangular parallelepiped and has only 1 face covered by the polymer layer, namely the face from which the mandrel emerges.

7. Block according to any one of Claims 1 to 4, **characterized in that** the insert is cylindrical in shape and its entire surface is covered with a polymer layer.

8. Block according to Claim 7, **characterized in that** the mandrel is positioned in a direction orthogonal to that of the axis of the cylinder.

9. Use of the block according to any one of Claims 1 to 8 for machining dental prosthetic components such as crowns, bridges, inlay-cores (post + core), posts, implant abutments.

10. Method for manufacturing the block which is the subject of any one of the preceding claims, **characterized in that** it comprises the following steps:
- preparing a mould comprising 2 hollow parts, respectively, a first part in the shape of a cube or parallelepiped extending on one of its sides into a second part shaped as the mandrel,
- positioning the previously manufactured insert in the first part,
- injecting a polymer material into the mould in such a manner as to fill the 2 parts,
- crosslinking the polymer material,
- demoulding the block.
